(19) Europäisches Patentamt
European Patent Office
Office européen des brevets

(11) EP 4 353 841 A1

(12) EUROPEAN PATENT APPLICATION
published in accordance with Art. 153(4) EPC

(43) Date of publication:
17.04.2024 Bulletin 2024/16

(51) International Patent Classification (IPC):
*C21B 13/02* [(2006.01)]

(52) Cooperative Patent Classification (CPC):
**C21B 13/02;** Y02P 10/143

(21) Application number: 22824661.7

(22) Date of filing: 08.04.2022

(86) International application number:
PCT/JP2022/017431

(87) International publication number:
WO 2022/264666 (22.12.2022 Gazette 2022/51)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 15.06.2021 JP 2021099710

(71) Applicant: JFE Steel Corporation
Tokyo 100-0011 (JP)

(72) Inventors:
• **TERUI, Koki**
**Tokyo 100-0011 (JP)**
• **MORIYA, Kota**
**Tokyo 100-0011 (JP)**
• **OZAWA, Sumito**
**Tokyo 100-0011 (JP)**

(74) Representative: **Hoffmann Eitle**
**Patent- und Rechtsanwälte PartmbB
Arabellastraße 30
81925 München (DE)**

(54) **SHAFT FURNACE OPERATION METHOD AND REDUCE IRON PRODUCTION METHOD**

(57) Provided is a method for operating a shaft furnace that can produce reduced iron using a shaft furnace without preheating the raw material while reducing $CO_2$ emissions.

A method for operating a shaft furnace, including charging agglomerated ore into the shaft furnace and introducing a reducing gas consisting mainly of $H_2$ into the shaft furnace to reduce iron oxide contained in the agglomerated ore to obtain reduced iron, in which a temperature-increased gas containing $H_2O$, which is raised to 800°C or higher by combusting $H_2$ and $O_2$, is blown into the shaft furnace from a position above an introduction position of the reducing gas in a height direction of the shaft furnace.

FIG. 2

EP 4 353 841 A1

**Description**

TECHNICAL FIELD

This disclosure relates to a method for operating a shaft furnace and a method for producing reduced iron.

BACKGROUND

As methods to produce reduced iron by reducing raw materials containing iron oxide, the blast furnace method, which uses coke as the reducing material to produce hot metal, the method, which uses reducing gas as the reducing material and blows it into a vertical furnace (hereinafter referred to as "shaft furnace"), the method in which fine ore is reduced with a reducing gas in a fluidized bed, and the method in which agglomeration and reduction of raw materials are combined (rotary kiln method) are known.

In all of these methods of producing reduced iron, except the blast furnace method, carbon monoxide (CO) or hydrogen ($H_2$)-based reducing gas produced by reforming natural gas or coal is used as the reducing material. The raw material charged in the furnace is heated by convective heat transfer from the reducing gas to be reduced, and then discharged out of the furnace. Oxidized gases such as water ($H_2O$) and carbon dioxide ($CO_2$), as well as $H_2$ and CO gases that did not contribute to the reduction reaction, are discharged from the furnace.

The raw material (mainly $Fe_2O_3$) charged in the furnace undergoes the reduction reactions expressed by equations (2) and (3) below from the reducing gases, CO and $H_2$ gases.

$$Fe_2O_3 + 3CO \rightarrow 2Fe + 3CO_2 \qquad (2)$$

$$Fe_2O_3 + 3H_2 \rightarrow 2Fe + 3H_2O \qquad (3)$$

In detail, in the reduction by CO gas expressed by Equation (2), $CO_2$ is discharged as an exhaust gas after reduction. On the other hand, in the reduction by $H_2$ gas expressed by Equation (3), $H_2O$ is discharged as an exhaust gas after reduction.

Recently, global warming due to increased $CO_2$ emissions has become an issue. To reduce $CO_2$ emissions, one of the greenhouse gases considered to be a factor of global warming, the amount of reduction reaction by $H_2$ expressed by Equation (3) should be increased. Reduction reactions with CO and $H_2$ differ in the amount of heat generated or absorbed in the reaction. In detail, the heat of reduction reaction by CO is +6710 kcal/kmol ($Fe_2O_3$), while the heat of reduction reaction by $H_2$ is -22800 kcal/kmol ($Fe_2O_3$). In other words, the former is an exothermic reaction, whereas the latter is an endothermic reaction. Therefore, when the concentration of $H_2$ in the reducing gas is enhanced to increase the reaction amount in Equation (3), a significant endothermic reaction may occur, lowering the temperature in the furnace and causing the reduction reaction to stagnate. Therefore, it is necessary to compensate for the missing heat by some means.

As a technique to compensate for the insufficient heat, PTL 1 (JP5630222B) discloses a method for preheating iron oxide as the raw material charged from the top to a temperature of 100°C or higher and 627°C or lower in advance.

CITATION LIST

Patent Literature

PTL 1: JP5630222B

SUMMARY

However, the technique described in PTL 1 requires equipment to preheat the raw material.

It could thus be helpful to provide a method for operating a shaft furnace that can produce reduced iron using the shaft furnace without preheating the raw material while reducing $CO_2$ emissions.

(Solution to Problem)

As a result of conducting extensive study, we have found that the temperature drop at the upper part of the furnace can be suppressed by blowing combustion gas containing $H_2O$ generated by combusting $H_2$ and $O_2$ into the upper part of the shaft furnace as heat compensation during the reduction reaction using $H_2$ in the reduction furnace.

This disclosure was completed based on this finding. We thus provide the following.

[1] A method for operating a shaft furnace, comprising charging agglomerated ore into the shaft furnace and introducing a reducing gas consisting mainly of $H_2$ into the shaft furnace to reduce iron oxide contained in the agglomerated ore to obtain reduced iron,

wherein a temperature-increased gas containing $H_2O$, which is raised to 800°C or higher by combusting $H_2$ and $O_2$, is blown into the shaft furnace from a blowing position above an introduction position of the reducing gas in a height direction of the shaft furnace.

[2] The method for operating a shaft furnace according to [1], wherein the temperature-increased gas has a $H_2O$ content of 67% or more by volume and 98% or less by volume.

[3] The method for operating a shaft furnace according to [1] or [2], wherein the temperature-increased gas is 1000°C or lower.

[4] The method for operating a shaft furnace according to any one of [1] to [3], wherein a distance L in the height direction of the shaft furnace from a charging position of the agglomerated ore to the introduction position of the reducing gas and a distance l in the height direction of the shaft furnace from the charging position of the agglomerated ore to the blowing position of the temperature-increased gas satisfy the following equation (1):

$$L/4 \leq 1 \leq L/2 \tag{1}.$$

[5] A method for producing reduced iron using the method for operating a shaft furnace according to any one of [1] to [4].

(Advantageous Effect)

This disclosure can provide a method for operating a shaft furnace that can produce reduced iron using a shaft furnace without preheating the raw material while reducing $CO_2$ emissions.

BRIEF DESCRIPTION OF THE DRAWINGS

In the accompanying drawings:

FIG. 1 schematically illustrates the conventional method for operating a shaft furnace;
FIG. 2 schematically illustrates a method for operating a shaft furnace according to one of the disclosed embodiments; and
FIG. 3 illustrates a temperature distribution of agglomerated ore in the height direction of the shaft furnace, calculated by a mathematical model for the methods for operating a shaft furnace according to the example of this disclosure and comparative examples.

DETAILED DESCRIPTION

The following describes one of the disclosed embodiments. The disclosed embodiments are not limited to the following embodiment as long as they do not depart from the scope of this disclosure.

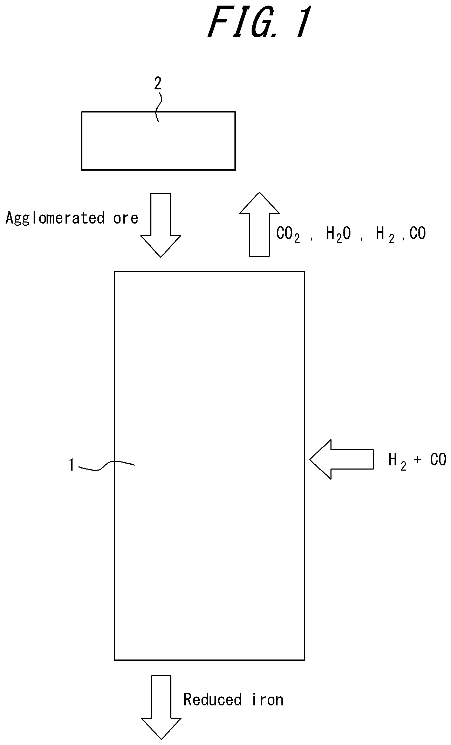

The following describes one of the disclosed embodiments. FIG. 1 schematically illustrates the conventional method for operating a shaft furnace. A surge bin 2, which stores agglomerated ore, is located above a shaft furnace 1. The surge bin 2 feeds the agglomerated ore to the upper part of the furnace. In the conventional method for operating a shaft furnace, CO and $H_2$ produced by reforming natural gas are blown in from the middle part of the furnace. After charged into the furnace, the agglomerated ore is heated by heat exchange with these reducing gases, and the iron oxide contained in the agglomerated ore is reduced to reduced iron. The reduced agglomerated ore is discharged out of the furnace from the lower part of the furnace.

[Reducing gas]

In this method for operating a shaft furnace according to the disclosed embodiment, a reducing gas consisting mainly of $H_2$ is introduced into the furnace. Here, containing $H_2$ as the main component means that the $H_2$ content in the reducing gas is 60% or more by volume. The $H_2$ content in the reducing gas is preferably 100%. As mentioned above, the reduction reaction using the reducing gas consisting mainly of Hz can suppress $CO_2$ emissions compared to the reduction reaction using a reducing gas consisting mainly of CO. To reduce $CO_2$ emissions, the CO content in the reducing gas should be reduced as much as possible. The CO content in the reducing gas is preferably 40% or less by volume and more preferably 0% by volume.

Although the amount of reducing gas introduced into the shaft furnace is not particularly limited, for maintaining reduced iron production and smoothly lowering agglomerated ore in the furnace, 1500 $Nm^3$/t-DRI or more is preferable. 3500 $Nm^3$/t-DRI or less is preferable.

The temperature of the reducing gas is not limited, but 800°C or higher is preferable for maintaining the prescribed reduction rate of the agglomerated ore. The temperature of the reducing gas is measured by a thermometer installed at an inlet for the reducing gas. By setting the temperature of the reducing gas to 800°C or higher, the prescribed reduction rate can be maintained and the degree of reduction of the agglomerated ore that is discharged from the lower part of the shaft furnace can be 90% or more.

As mentioned above, the reduction reaction of iron oxide by $H_2$ is an endothermic reaction. Therefore, there is a concern that the reduction of iron oxide by the reducing gas consisting mainly of $H_2$ will lower the temperature in the furnace and reduce the reduction rate.

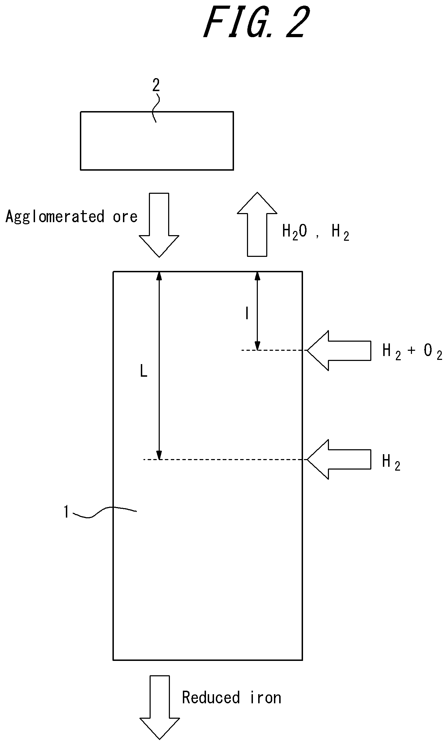

Therefore, in the disclosed embodiment, as illustrated in FIG. 2, in order to suppress the decrease in temperature inside the furnace, a temperature-increased gas of 800°C or higher is blown into the shaft furnace from the blowing position above the introduction position of the reducing gas in the height direction of the shaft furnace. As illustrated in FIG. 2, when the reducing gas is introduced from the middle part in the height direction of the shaft furnace, the reducing gas flows toward the upper part of the shaft furnace. Therefore, by blowing in the temperature-increased gas with high temperature from the blowing position above the introduction position of the reducing gas, the reduction area can be secured, and the decrease in temperature inside the furnace can be suppressed.

A gas containing $H_2O$, obtained by combusting $H_2$ and $O_2$, is used as the temperature-increased gas. Conventionally, high-temperature gas containing $CO_2$, obtained by combusting hydrocarbons, is blown in. In contrast, in the disclosed embodiment, by blowing in a temperature-increased gas containing $H_2O$ obtained by combusting $H_2$ and $O_2$, the decrease in temperature inside the furnace can be suppressed while $CO_2$ emissions are reduced.

[Temperature-increased gas]

The temperature-increased gas contains $H_2O$. The temperature-increased gas preferably contains $H_2O$ of more than 67% by volume. The $H_2O$ content in the temperature-increased gas is preferably 98% or less by volume. When $H_2O$ constitutes the whole temperature-increased gas, the agglomerated ore reduced above the blowing position of the temperature-increased gas is reoxidized by the temperature-increased gas. Therefore, it is preferable to add a small amount of $H_2$ to the temperature-increased gas to suppress the reoxidation, and thus, the upper limit of the $H_2O$ content in the temperature-increased gas is preferably 98% by volume.

The temperature-increased gas contains $H_2O$ obtained by combusting $H_2$ and $O_2$. The fact that the temperature-increased gas contains $H_2O$ obtained by combusting $H_2$ and $O_2$ leads to reduced $CO_2$ emissions. To further reduce $CO_2$ emissions, the $H_2$ used for combustion is preferably generated by using electricity generated with reduced $CO_2$ emissions, for example, by electrolyzing water.

The temperature-increased gas may contain components other than $H_2O$. The temperature-increased gas can contain, for example, $N_2$, $H_2$, $O_2$, $CO_2$, and $CO$. To reduce $CO_2$ emissions, the $CO_2$ content in the temperature-increased gas is preferably 28% or less by volume. To reduce $CO_2$ emissions, the $CO$ content in the temperature-increased gas is preferably 19% or less by volume.

In general, in shaft furnace operations, the gas discharged from the top of the furnace is recovered and used again as reducing gas. In the gas discharged from the top of the furnace, inert gas ($N_2$) is preferably not included to ensure that the discharged gas has sufficient reducing capacity when reused as reducing gas. Therefore, it is preferable to reduce the inert gas content in the temperature-increased gas. Preferably, the inert gas content in the temperature-increased gas is 50% or less by volume.

The temperature of the temperature-increased gas is 800°C or higher. The temperature of the temperature-increased gas is measured, for example, by a thermometer installed at the inlet for the temperature-increased gas. By setting the temperature of the temperature-increased gas to 800°C or higher, the decrease in temperature inside the furnace associated with the reduction reaction by hydrogen can be effectively suppressed. No upper limit is placed on the temperature of the temperature-increased gas, but the temperature of the temperature-increased gas is preferably 1000°C or lower. By setting the temperature of the temperature-increased gas to 1000°C or lower, the occurrence of clustering, in which raw materials stick to each other, can be more suitably suppressed. The temperature of the temperature-increased gas is preferably 900°C or higher. The temperature of the temperature-increased gas is more preferably 950°C or lower.

The amount of temperature-increased gas blown into the shaft furnace is preferably 200 $Nm^3$/t-DRI or more. The amount of temperature-increased gas blown into the shaft furnace is preferably 400 $Nm^3$/t-DRI or less. Here, DRI means direct reduced iron. The blowing amount of the temperature-increased gas is measured, for example, by a gas flow meter installed at the inlet for the temperature-increased gas. By increasing the blowing amount of the temperature-increased gas to 200 $Nm^3$/t-DRI or more, the decrease in temperature inside the furnace associated with hydrogen reduction can be effectively suppressed. Also, by setting the blowing amount of the temperature-increased gas to 400

Nm$^3$/t-DRI or less, the blowing out of the temperature-increased gas is suppressed and the heating efficiency can be improved. The blowing amount of the temperature-increased gas is more preferably 250 Nm$^3$/t-DRI or more. The blowing amount of the temperature-increased gas is more preferably 350 Nm$^3$/t-DRI or less.

The blowing position of the temperature-increased gas is provided at the upper side in the height direction of the shaft furnace relative to the introduction position of the reducing gas. The reduction area can be secured by blowing the temperature-increased gas from above the introduction position of the reducing gas in the height direction of the shaft furnace. The blowing position of the temperature-increased gas is not limited to one location but may be provided in multiple locations in the circumferential direction of the shaft furnace.

From the viewpoint of more efficiently controlling the temperature drop in the shaft furnace, as illustrated in FIG. 2, it is preferable that the distance L in the height direction of the shaft furnace from a charging position of the agglomerated ore to the introduction position of the reducing gas and the distance l in the height direction of the shaft furnace from the charging position of the agglomerated ore to the blowing position of the temperature-increased gas satisfy the following equation (1):

$$L/4 \leq l \leq L/2 \qquad\qquad (1).$$

In detail, it is preferable to blow the temperature-increased gas into the shaft furnace from a position where the distance l in the height direction of the shaft furnace from the charging position of the agglomerated ore is L/4 or more. It is preferable to blow the temperature-increased gas into the shaft furnace from a position where the distance l in the height direction of the shaft furnace from the charging position of the agglomerated ore is L/2 or less. By blowing gas containing $H_2O$ from a position where the distance l from the charging position of the agglomerated ore is L/4 or more, the decrease in temperature inside the furnace associated with hydrogen reduction can be suppressed more efficiently. In addition, the reduction of the agglomerated ore stagnates from the position at which the temperature-increased gas containing $H_2O$ is blown in. Therefore, by blowing the temperature-increased gas containing $H_2O$ from the position where the distance l from the charging position of the agglomerated ore is L/2 or less, the area for reducing the iron oxide contained in the agglomerated ore in the furnace can be secured and the degree of reduction can be further improved. Here, the charging position of the agglomerated ore refers to the surface layer face of the agglomerated ore packed layer in the shaft furnace. The introduction position of the reducing gas refers to the height of the inlet for the reducing gas. The blowing position of the temperature-increased gas refers to the position of the inlet for the temperature-increased gas.

The introduction position of the reducing gas need not be limited as long as it is below the blowing position of the temperature-increased gas. The introduction position of the reducing gas is not limited to one location but may be provided in multiple locations in the circumferential direction of the shaft furnace.

The agglomerated ore to be charged into the shaft furnace may be pulverized ore or pellets of fine ore baked into a spherical shape. The agglomerated ore may be sintered ore made by calcining raw materials containing iron oxide. In this disclosure, pulverized ore, pellets and sintered ore are collectively referred to as "agglomerated ore".

Other than the conditions described above, the conventional method can be followed.

If the method for operating a shaft furnace described above is used to reduce iron oxide contained in agglomerated ore, reduced iron can be produced using a shaft furnace without preheating the raw material while reducing $CO_2$ emissions.

EXAMPLES

Using a one-dimensional mathematical model for heat transfer and reaction, the temperature distribution in the furnace was calculated for a shaft furnace operated in accordance with the method for operating a shaft furnace according to the disclosed embodiment. Table 1 lists the various values used in the calculation. In Comparative Example 1 in Table 1, current typical shaft furnace operating conditions are assumed. More precisely, in Comparative Example 1, it is assumed that the gas composition of the reducing gas is CO of 60% by volume and $H_2$ of 40% by volume, and no temperature-increased gas is blown in. In Comparative Example 2, it is assumed that the reducing gas is $H_2$ and no temperature-increased gas is blown in. In Example 1, it is assumed that $H_2O$ is blown in as temperature-increased gas in contrast to Comparative Example 2. The reducing gas was introduced at the center part of the shaft furnace in the height direction, and the heating gas was blown in at the center part between the introduction position of the reducing gas and the uppermost part of the shaft furnace.

[Table 1]

Table 1

| | | Comparative Example 1 | Comparative Example 2 | Example 1 |
|---|---|---|---|---|
| Introduction amount of reducing gas | [Nm³/t-DRI] | 1490 | 1490 | 1490 |
| Blowing amount of temperature-increased gas | [Nm³/t-DRI] | 0 | 0 | 250 |
| Production of agglomerated ore | [t/hr] | 100 | 100 | 100 |
| Reducing gas composition | CO | [-] | 60 | 0 | 0 |
| | H₂ | [-] | 40 | 100 | 100 |
| Temperature of reducing gas | [°C] | 900 | 900 | 900 |
| Temperature of temperature-increased gas | [°C] | | | 800 |

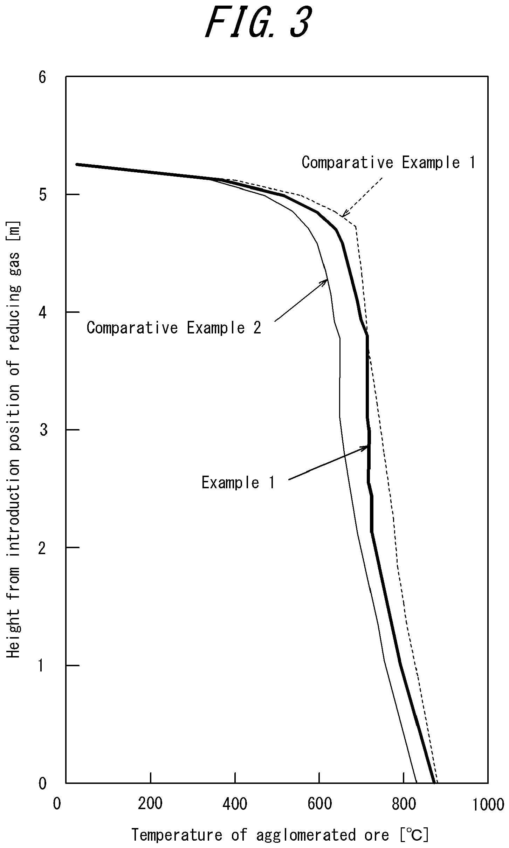

For the calculation of direct reduction for the shaft furnace method, a mathematical model was constructed using the concept of a one-dimensional unsteady model for blast furnaces (Ref. 1) to use it for the calculation for the shaft furnace. For the reduction reaction model for agglomerated ore, used was the over-all reaction rate equation (Ref. 2, Ref. 3), which considers that in the reduction reaction, three processes: diffusion through the gaseous film around the iron ore, intraparticle diffusion, and chemical reaction at the reactive interface progress steadily. From these mathematical models, the temperature of the agglomerated ore and the degree of reduction of iron oxide contained in the agglomerated ore were calculated for each example, depending on the gas blast conditions. Results are listed in FIG. 3 and Table 2.

[Table 2]

Table 2

| | Comparative Example 1 | Comparative Example 2 | Example 1 |
|---|---|---|---|
| Degree of reduction [%] | 92 | 86 | 91 |

FIG. 3 illustrates the temperature distribution of agglomerated ore in the furnace in the height direction of the shaft furnace calculated by the mathematical model. In FIG. 3, the vertical axis is the position in the height direction from the introduction position of the reducing gas. As illustrated in FIG. 3, compared to the temperature distribution of Comparative Example 1, the temperature of the agglomerated ore in the furnace is low in Comparative Example 2 due to the effect of heat absorption by hydrogen reduction. In contrast, in Example 1, the temperature of the agglomerated ore is increased by blowing $H_2O$ as the temperature-increased gas.

As listed in Table 2, the attained degree of reduction is significantly low in Comparative Example 2 compared to Comparative Example 1. In contrast, in Example 1, the degree of reduction is improved by blowing in $H_2O$ as the temperature-increased gas to the same level as in Comparative Example 1.

[Ref. 1] Hideho Kubo and two others, "A Dynamic One-Dimensional Simulation Model of Blast Furnace Process," KAWASAKI STEEL GIHO, Vol. 14, 1982, No. 2, p. 134-144.

[Ref. 2] Iwao Muchi and three others, "Reaction Kinetics in the Blast Furnace," Journal of the Japan Institute of Metals and Materials, Vol. 30, 1966, No. 9, p. 826-831.

[Ref. 3] Junichiro Yagi, and three others, "Application of the Reactions Concerning H2 and Steam and the Temperature of Top Gas to the Blast-Furnace Model," Journal of the Japan Institute of Metals and Materials, Vol. 31, 1697, No. 6, p. 711-716.

REFERENCE SIGNS LIST

1    Shaft furnace

2    Surge bin

**Claims**

1.  A method for operating a shaft furnace, comprising charging agglomerated ore into the shaft furnace and introducing a reducing gas consisting mainly of $H_2$ into the shaft furnace to reduce iron oxide contained in the agglomerated ore to obtain reduced iron,
    wherein a temperature-increased gas containing $H_2O$, which is raised to 800°C or higher by combusting $H_2$ and $O_2$, is blown into the shaft furnace from a blowing position above an introduction position of the reducing gas in a height direction of the shaft furnace.

2.  The method for operating a shaft furnace according to claim 1, wherein the temperature-increased gas has a $H_2O$ content of 67% or more by volume and 98% or less by volume.

3.  The method for operating a shaft furnace according to claim 1 or 2, wherein the temperature-increased gas is 1000°C or lower.

4.  The method for operating a shaft furnace according to any one of claims 1 to 3, wherein a distance L in the height direction of the shaft furnace from a charging position of the agglomerated ore to the introduction position of the reducing gas and a distance l in the height direction of the shaft furnace from the charging position of the agglomerated ore to the blowing position of the temperature-increased gas satisfy the following equation (1):

$$L/4 \leq l \leq L/2 \qquad\qquad (1).$$

5.  A method for producing reduced iron using the method for operating a shaft furnace according to any one of claims 1 to 4.

# FIG. 1

2

Agglomerated ore

$CO_2$ , $H_2O$ , $H_2$ , $CO$

1

$H_2$ + $CO$

Reduced iron

# FIG. 2

Agglomerated ore

$H_2O$ , $H_2$

$H_2 + O_2$

$H_2$

L

l

Reduced iron

## FIG. 3

## INTERNATIONAL SEARCH REPORT

| International application No. |
| --- |
| **PCT/JP2022/017431** |

| **A.** | **CLASSIFICATION OF SUBJECT MATTER** |
| --- | --- |

*C21B 13/02*(2006.01)i
FI:   C21B13/02

According to International Patent Classification (IPC) or to both national classification and IPC

| **B.** | **FIELDS SEARCHED** |
| --- | --- |

Minimum documentation searched (classification system followed by classification symbols)

C21B13/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | JP 2012-102372 A (NIPPON STEEL CORP.) 31 May 2012 (2012-05-31)<br>    claims 1-4, paragraphs [0001]-[0040], fig. 1-13 | 1-5 |
| A | JP 49-044926 A (NIPPON STEEL CORP.) 27 April 1974 (1974-04-27)<br>    entire text | 1-5 |
| A | CN 112176144 A (SHANGHAI MEISHAN IRON & STEEL CO., LTD.) 05 January 2021<br>(2021-01-05)<br>    entire text | 1-5 |

☐ Further documents are listed in the continuation of Box C.      ☑ See patent family annex.

| | |
| --- | --- |
| *       Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **06 May 2022** | **17 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/017431**

| Patent document cited in search report | | | Publication date (day/month/year) | Patent family member(s) | Publication date (day/month/year) |
|---|---|---|---|---|---|
| JP | 2012-102372 | A | 31 May 2012 | (Family: none) | |
| JP | 49-044926 | A | 27 April 1974 | (Family: none) | |
| CN | 112176144 | A | 05 January 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5630222 B

**Non-patent literature cited in the description**

- **HIDEHO KUBO.** A Dynamic One-Dimensional Simulation Model of Blast Furnace Process. *KAWASAKI STEEL GIHO,* 1982, vol. 14 (2), 134-144
- **IWAO MUCHI.** Reaction Kinetics in the Blast Furnace. *Journal of the Japan Institute of Metals and Materials,* 1966, vol. 30 (9), 826-831

- **JUNICHIRO YAGI.** Application of the Reactions Concerning H2 and Steam and the Temperature of Top Gas to the Blast-Furnace Model. *Journal of the Japan Institute of Metals and Materials,* vol. 31 (6), 711-716